# FASCICULE DE BREVET EUROPEEN

(11) **EP 1 193 644 B1**
(45) Date de publication et mention de la délivrance du brevet: **14.04.2010**
(21) Numéro de dépôt: 01122441.7
(22) Date de dépôt: 20.09.2001
(51) Int. Cl.: G06K 13/08

(54) **Ensemble pour l'échange de données représentatives d'un utilisateur autorisé d'un véhicule automobile**
System zum Austausch von Daten zur Authorisation eines KFZ-Benutzers
Assembly for exchange of data representative of an authorised automotive vehicle user

(30) Priorité: 27.09.2000 FR 0012256
(43) Date de publication de la demande: 03.04.2002
(73) Titulaire: VALEO SECURITE HABITACLE S.A.S., 94042 Créteil Cédex (FR)
(72) Inventeur: Batty, Raoul, 58000 Nevers (FR); Lesueur, Guillaume, 58000 Nevers (FR)
(74) Mandataire: Rosolen-Delarue, Katell

(56) Documents cités:
- EP-A- 0 917 092
- WO-A-00/08589
- FR-A- 2 779 563
- US-A- 5 563 397

## Description

La présente invention concerne un ensemble pour l'échange de données représentatives notamment d'au moins un utilisateur autorisé d'un véhicule automobile.

On connaît déjà dans l'état de la technique, notamment d'après FR-A-2 779 563 (FR-98 07250) et FR-A-2 786 297 (FR-98 14571), un ensemble pour l'échange de données, du type comprenant un organe portatif formant support de données, ayant une forme générale prismatique mince délimitée par deux grandes faces longitudinales opposées, deux petites faces longitudinales opposées et deux petites faces transversales opposées, et une unité fixe d'échange de données munie d'un tunnel de logement de l'organe portatif comprenant des parties proximale et distale séparées par un volet mobile, chaque partie du tunnel étant délimitée par deux petites parois longitudinales opposées parallèles aux petites faces de l'organe portatif lorsque ce dernier est logé dans le tunnel.

Un ensemble de ce type est avantageusement utilisé pour assurer une fonction antivol d'un véhicule automobile. A cet effet, l'unité fixe d'échange de données est agencée dans l'habitacle du véhicule et assure la fonction antivol en traitant des données dont certaines, contenues dans l'organe portatif, sont représentatives d'au moins un utilisateur autorisé.

Lorsque l'organe portatif est introduit dans le tunnel de l'unité d'échange de données, les petites et grandes faces longitudinales de cet organe portatif ont tendance à subir une usure inesthétique par frottement avec les parois complémentaires de guidage délimitant le tunnel.

Par ailleurs, l'unité d'échange de données comprend habituellement des organes sensibles aux salissures (coulures de liquide, dépôts de poussière, etc.) tels qu'un circuit imprimé. Or les parois délimitant le tunnel de logement de l'organe portatif sont généralement ajourées pour permettre la coopération de cet organe portatif avec divers éléments d'actionnement de contacteurs électriques ou d'entraînement d'une bascule de blocage de l'organe portatif. Ces parois ajourées font communiquer les organes sensibles aux salissures avec l'extérieur de l'unité fixe, via le tunnel, facilitant ainsi l'accès indésirable de salissures jusqu'à ces organes. De plus, l'introduction de l'organe portatif dans le tunnel a tendance à pousser les salissures vers la partie distale du tunnel et les zones ajourées des parois délimitant ce tunnel.

L'invention a pour but d'éviter l'usure inesthétique de l'organe portatif d'un ensemble pour l'échange de données du type précité et d'optimiser l'étanchéité aux salissures de l'unité fixe de cet ensemble.

A cet effet, l'invention a pour objet un ensemble pour l'échange de données, du type précité, selon la revendication 1.

Suivant d'autres caractéristiques de cet ensemble:
- chaque petite paroi longitudinale de la partie proximale du tunnel comprend un doigt racleur destiné à coopérer avec une rainure de guidage correspondante de l'organe portatif ;
- chaque rainure de guidage de l'organe portatif est munie d'une extrémité distale débouchante et d'une extrémité proximale fermée délimitée par un congé s'incurvant parallèlement aux grandes faces longitudinales de l'organe portatif ;
- la partie proximale du tunnel est délimitée par un organe de diffusion de lumière ;
- l'unité d'échange de données comprend au moins un contacteur électrique, extérieur au tunnel, actionné par l'organe portatif par l'intermédiaire d'un élément de commande faisant saillie dans le tunnel à travers une petite paroi longitudinale délimitant celui-ci de façon à coopérer avec une rainure de guidage de l'organe portatif ;
- l'unité d'échange de données comprend
   une bascule de blocage de l'organe portatif dans le tunnel munie d'une partie interne au tunnel, destinée à coopérer avec l'organe portatif, et d'une partie externe au tunnel, et
   au moins un contacteur électrique, extérieur au tunnel, actionné par l'organe portatif par l'intermédiaire de la partie externe de la bascule de blocage ;
- l'unité d'échange de données comprend deux contacteurs électriques, extérieurs au tunnel, actionnés successivement par l'organe portatif, lorsque ce dernier est déplacé dans le tunnel, par l'intermédiaire de la partie externe de la bascule de blocage ;
- la partie distale du tunnel est délimitée par deux grandes parois longitudinales opposées, adjacentes aux petites parois, l'unité d'échange de données comprenant un circuit imprimé séparé du volume interne du tunnel par une première grande paroi longitudinale, la dimension longitudinale de cette première grande paroi longitudinale étant telle que l'organe portatif est toujours séparé du circuit imprimé par la première grande paroi longitudinale quelque soit la position de l'organe portatif dans la partie distale du tunnel ;
- la partie de bascule de blocage interne au tunnel s'étend à travers la seconde grande paroi longitudinale du tunnel ;
- l'unité d'échange de données est agencée dans un véhicule automobile et assure une fonction d'antivol par traitement de données dont certaines, contenues dans l'organe portatif, sont représentatives d'au moins un utilisateur autorisé du véhicule ;
- le contacteur électrique actionné par l'intermédiaire d'un élément de commande faisant saillie dans le tunnel active un état de mise sous tension d'accessoires du véhicule ;
- un des contacteurs électriques actionnés par l'intermédiaire de la partie externe de la bascule de blocage active un état de marche et l'autre des contacteurs électriques actionnés par l'intermédiaire de la partie externe de la bascule de blocage active un état de démarrage ou d'arrêt du moteur du véhicule du véhicule.

L'invention sera mieux comprise à la lecture de la description qui va suivre, donnée uniquement à titre d'exemple et faite en se référant aux dessins dans lesquels :
- la figure 1 est une vue en perspective de l'ensemble pour l'échange de données selon l'invention ;
- la figure 2 est une vue en perspective éclatée de l'ensemble pour l'échange de données représenté sur la figure 1 ;
- la figure 3 est une vue en perspective d'organes internes de l'ensemble pour l'échange de données représenté sur la figure 1, le point de vue de la figure 3 étant opposé à celui de la figure 1 ;
- les figures 4 et 5 sont des vues en coupe de l'ensemble pour l'échange de données représenté sur la figure 1, respectivement suivant les lignes 4-4 de la figure 1 et 5-5 de la figure 4 ;
- la figure 6 est une vue de côté de l'organe portatif et d'un organe de diffusion de lumière porté par l'unité fixe ;
- la figure 7 est une vue de dessus de l'organe portatif représenté sur la figure 1, suivant la flèche 7 de la figure 6 ;
- la figure 8 est une vue en coupe suivant la ligne 8-8 de la figure 6.

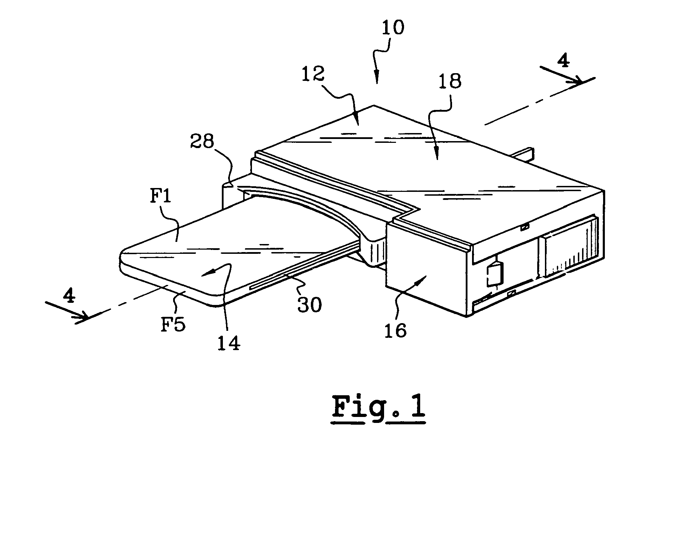

On a représenté sur les figures 1 à 5 un ensemble pour l'échange de données selon l'invention, désigné par la référence générale 10.

Cet ensemble comprend une unité fixe 12 d'échange de données agencée dans un véhicule automobile, par exemple dans une planche de bord ou une console de l'habitacle de ce véhicule.

L'ensemble 10 comprend également un organe portatif 14 ou badge destiné à être logé dans l'unité fixe 12.

L'unité fixe 12 assure une fonction d'antivol par traitement de données dont certaines, contenues dans l'organe portatif, sont représentatives d'au moins un utilisateur autorisé du véhicule. Les données représentatives de l'utilisateur sont stockées dans l'organe portatif 14 et traitées par l'unité fixe 12 à l'aide de moyens classiques.

Dans ce qui suit, un élément est qualifié de proximal lorsqu'il est proche de la main de l'utilisateur introduisant l'organe portatif dans l'unité fixe. Dans le cas contraire, l'élément est qualifié de distal. Par ailleurs, la direction générale de déplacement de l'organe portatif dans l'unité fixe est qualifiée de longitudinale.

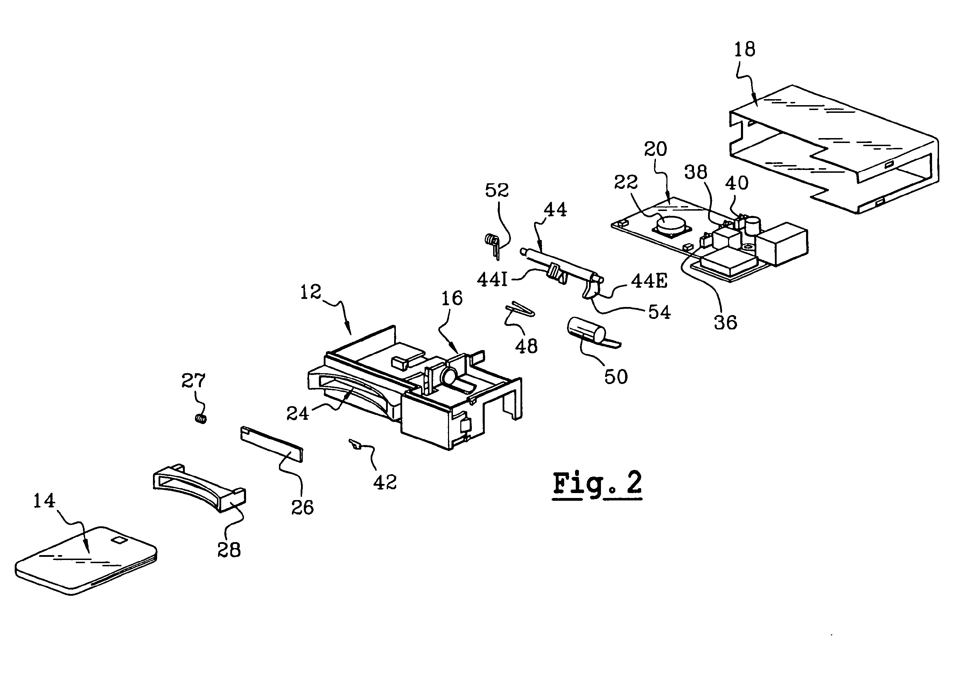

L'unité fixe 12 a une forme générale prismatique. En se référant plus particulièrement à la figure 2, on voit que l'unité fixe 12 comprend un support 16 logé dans un boîtier 18. Un circuit imprimé 20, portant plusieurs composants classiques, est fixé sur le support 16, à l'intérieur du boîtier 18. Parmi ces composants classiques, on reconnaît notamment des moyens d'échange de données à transpondeur comprenant une bobine d'induction 22 destinée à interagir de façon électromagnétique avec des moyens complémentaires agencés dans l'organe portatif.

En se référant notamment aux figures 2, 4 et 5, on voit que l'unité fixe est munie d'un tunnel 24 de logement de l'organe portatif 14 comprenant des parties proximale 24P et distale 24D séparées par un volet mobile 26. Ce dernier est rappelé élastiquement vers une position d'obturation de la partie distale 24D du tunnel par un ressort à effet angulaire 27 illustré sur la figure 2. Le volet 26 est déplacé vers une position ouverte d'accès à la partie distale 24D du tunnel, à l'encontre de la force élastique de rappel du ressort 27, par coopération avec l'extrémité distale de l'organe portatif 14 introduit dans le tunnel.

Chaque partie 24P, 24D du tunnel comprend une extrémité opposée au volet 26 qui débouche vers l'extérieur de l'unité fixe 12. On notera que l'unité fixe 12 est habituellement agencée dans la planche de bord ou la console de l'habitacle de façon à masquer à l'égard de l'utilisateur l'extrémité débouchante de la partie distale 24D du tunnel. L'extrémité débouchante de la partie proximale 24D du tunnel forme l'extrémité d'accès au tunnel par laquelle est introduit l'organe portatif 14.

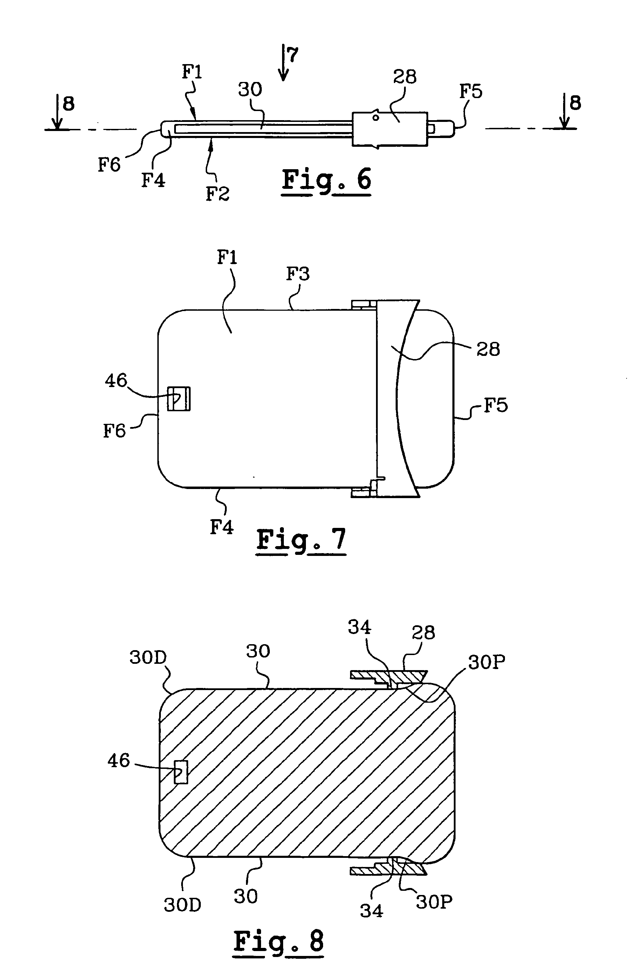

L'organe portatif 14, qui est représenté plus en détail sur les figures 6 à 8, a une forme générale prismatique mince délimitée par deux grandes faces longitudinales opposées F1, F2, deux petites faces longitudinales opposées F3, F4 et deux petites faces transversales opposées F5, F6 délimitant respectivement les extrémités proximales et distales de l'organe portatif.

Le tunnel 24 a une forme générale complémentaire de celle de l'organe portatif 14. Ainsi, chaque partie 24P, 24D du tunnel est délimitée par deux grandes parois longitudinales opposées PD1, PD2, PP1, PP2 et deux petites parois longitudinales opposées PD3, PD4, PP3, PP4. Les petites parois longitudinales PD3, PD4, PP3, PP4 de chaque partie 24P, 24D du tunnel sont parallèles aux petites faces F3, F4 de l'organe portatif 14 lorsque ce dernier est logé dans le tunnel 24. Les grandes parois longitudinales PD1, PD2, PP1, PP2 de chaque partie 24P, 24D du tunnel sont adjacentes aux petites parois PD3, PD4, PP3, PP4 et donc parallèles aux grandes faces F1, F2 de l'organe portatif 14 lorsque ce dernier est logé dans le tunnel 24.

De préférence, la partie proximale 24P du tunnel est délimitée par un organe translucide 28 de diffusion de lumière clairement représenté sur les figures 2, 3, 6 et 7.

En se référant notamment aux figures 1, 3 et 6, on voit qu'une rainure de guidage 30 est ménagée sur chaque petite face longitudinale F3, F4 de l'organe portatif 14. Cette rainure 30 est destinée à coopérer par emboîtement avec une nervure complémentaire 32 de guidage ménagée sur une petite paroi longitudinale correspondante PD3, PD4 de la partie distale 24D du tunnel.

Chaque petite paroi longitudinale PP1, PP2 de la partie proximale 24P du tunnel comprend un doigt racleur 34 destiné à coopérer avec une rainure de guidage correspondante 30 de l'organe portatif 14. Les doigts racleurs 34 sont de préférence venus de matière avec l'organe 28 de diffusion de lumière.

En se référant plus particulièrement à la figure 8, on voit que chaque rainure de guidage 30 de l'organe portatif 14 est muni d'une extrémité distale 30D débouchante et d'une extrémité proximale fermée 30P délimitée par un congé s'incurvant parallèlement aux grandes faces longitudinales F1, F2 de l'organe portatif 14.

Les doigts racleurs 34 sont destinés à empêcher la pénétration de salissures dans la partie distale 24D du tunnel. En effet, les doigts racleurs 34, situés en amont du volet 26 par rapport au sens d'introduction de l'organe portatif 14, sont destinés à coopérer par emboîtement avec les rainures 30 de l'organe portatif 14 de façon à chasser les éventuelles salissures contenues dans ces rainures 30, avant que l'extrémité distale de l'organe portatif 14 franchisse le volet 26. Sous l'effet du raclage des doigts 34, les salissures éventuelles sont repoussées vers les extrémités proximales 30P des rainures de guidage, les congés facilitant l'évacuation des salissures de ces rainures.

L'extrémité proximale de l'organe portatif 14, destinée à saisir cet organe 14, est accessible en permanence depuis l'extérieur du tunnel 24, quelle que soit sa position dans le tunnel. Les rainures 30 de l'organe portatif et les doigts racleurs 34 du tunnel forment des moyens détrompeurs empêchant l'utilisateur d'introduire par erreur l'extrémité proximale de l'organe portatif dans le tunnel. En effet, les extrémités proximales fermées des rainures de guidage 30 empêchent l'emboîtement de ces rainures 30 avec les doigts racleurs 34 du tunnel et donc l'introduction erronée de l'extrémité proximale de l'organe portatif dans le tunnel 24.

Lors de l'introduction de l'organe portatif 14 dans le tunnel 24, les rainures 30 coopèrent tout d'abord avec les doigts racleurs 34 puis avec les nervures 32 pour guider cet organe portatif 14 dans le tunnel 24. Les frottements entre l'organe portatif 14 et les parois délimitant le tunnel 24 se limitent donc essentiellement aux frottements entre les surfaces délimitant, d'une part les rainures 30 et, d'autre part, les doigts racleurs 34 et les nervures de guidage 32. Ces surfaces, de faibles dimensions, sont peu ou pas visibles aux yeux de l'utilisateur ce qui préserve d'autant mieux l'aspect esthétique de l'organe portatif 14 en cas d'usure des surfaces de frottement.

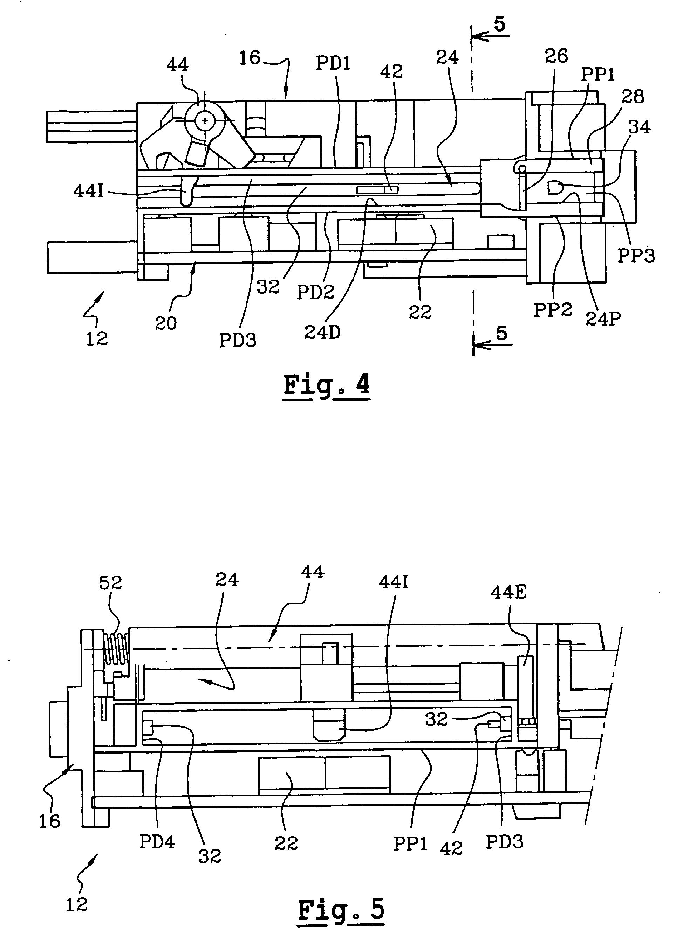

Par ailleurs, en considérant la figure 4, on notera que le circuit imprimé 20 est séparé du volume interne du tunnel 24 par la grande paroi longitudinale PD2 de la partie distale 24D du tunnel. La dimension longitudinale de cette grande paroi PD2 est telle que l'organe portatif 14 est toujours séparé du circuit imprimé 20 par cette grande paroi longitudinale PD2 quelque soit la position de l'organe portatif 14 dans la partie distale 24D du tunnel. De ce fait, la grande paroi PD2 séparant le circuit imprimé 20 du volume interne de la partie distale du tunnel 24 protège le circuit imprimé 20 des salissures pénétrant éventuellement dans la partie distale 24D du tunnel. De plus, les salissures éventuellement présentes dans la partie distale 24D du tunnel seront facilement évacuées de cette partie 24D par l'extrémité débouchante de cette dernière qui est entièrement ouverte vers l'extérieur de l'unité fixe 12. Les salissures sont chassées vers l'extérieur de l'unité 12, à travers l'extrémité débouchante de la partie distale 24D du tunnel, notamment par le déplacement de l'organe portatif 14 dans le tunnel 24.

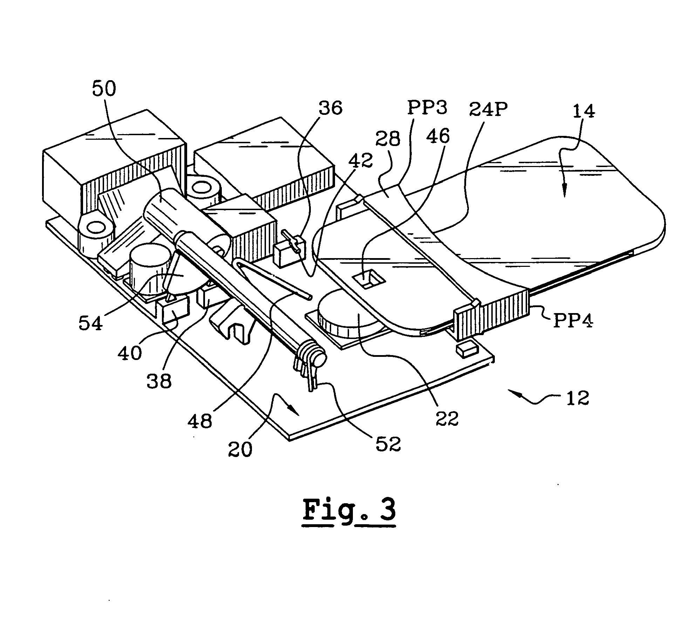

En se référant aux figures 2 et 3, on voit que le circuit imprimé 20 porte également trois contacteurs électriques 36 à 40 disposés successivement l'un derrière l'autre par rapport au sens d'introduction de l'organe portatif 14 dans le tunnel 24. Ces contacteurs électriques 36 à 40 sont de type classique à poussoir.

Le premier contacteur électrique 36, en considérant le sens d'introduction de l'organe portatif 14 dans le tunnel, est destiné à activer un état de mise sous tension d'accessoires du véhicule. Le deuxième contacteur électrique 38 est destiné à activer un état de marche du véhicule. Le troisième contacteur électrique 40 est destiné à faire démarrer ou arrêter le moteur du véhicule. Les trois contacteurs électriques seront appelés par la suite contacteurs d'accessoires 36, de marche 38 et de démarrage 40.

Les contacteurs électriques 36 à 40, extérieurs au tunnel 24, sont destinés à être actionnés par l'organe portatif 14 par l'intermédiaire de moyens qui seront décrits ci-dessous.

En se référant notamment aux figures 2 à 5, on voit que le contacteur d'accessoires 36 est actionné par l'intermédiaire d'un doigt de commande 42 faisant saillie dans le tunnel 24 à travers une petite paroi longitudinale PD3 délimitant la partie distale 24D de ce tunnel. En se référant plus particulièrement aux figures 4 et 5, on notera que le doigt de commande 42 fait saillie à travers la nervure de guidage 32 de la petite paroi PD3.

Le doigt de commande 42 est destiné à coopérer avec une rainure de guidage correspondante 30 de l'organe portatif 14. Le doigt de commande 42 forme donc un élément intermédiaire de renvoi permettant à l'organe portatif 14 se déplaçant dans le tunnel 24 d'actionner le contacteur d'accessoires 36 disposé à l'extérieur de ce tunnel 24.

L'organe portatif 14 est déplaçable longitudinalement dans le tunnel 24 depuis l'extrémité d'accès de ce tunnel vers une position stable d'actionnement du contacteur de marche 38, en passant par une position intermédiaire, généralement temporaire, d'actionnement du contacteur d'accessoires 36.

De façon classique, l'organe portatif 14 est maintenu dans sa position stable d'actionnement du contacteur de marche 38 par une bascule de blocage 44 montée rotative dans l'unité fixe 12 autour d'un axe transversal à la direction longitudinale de déplacement de l'organe portatif 14. La bascule de blocage est munie d'une partie 44E externe au tunnel 24 et d'une partie 44I interne à ce tunnel 24 destinée à coopérer avec l'organe portatif 14, plus particulièrement avec le bord d'un orifice 46 de cet organe portatif 14 débouchant dans chacune des grandes faces F1, F2 de cet organe 14. On notera que la bascule de blocage 44 s'étend à l'opposé du circuit imprimé 20 par rapport au tunnel 24, la partie interne 44I de la bascule s'étendant à travers la grande paroi longitudinale PD1 du tunnel 24 (voir notamment figure 4).

De façon classique, la bascule de blocage 44 est déplaçable entre deux positions, respectivement, de libération de l'organe portatif 14 et de coopération avec cet organe portatif 14. Dans cette dernière position, la bascule 44 bloque l'organe portatif 14 dans sa position stable par emboîtement d'un bras de la partie interne 44I de la bascule dans l'orifice 46 de cet organe portatif.

La bascule de blocage 44 est rappelée vers chacune de ces deux positions de libération et de coopération avec l'organe portatif par un ressort bistable classique 48, par exemple en forme générale d'épingle, comme cela est représenté sur les figures 2 et 3. Conformément à un fonctionnement classique, la bascule de blocage 44 permet d'obtenir un effet d'avalement de l'organe portatif 14 au moment où cet organe 14 atteint sa position stable d'actionnement du contacteur de marche 38.

Des moyens classiques 50 à électro-aimant (voir notamment figures 2 et 3) forment une butée amovible d'interdiction du retour de la bascule de blocage 44 de sa position de coopération avec l'organe portatif 14 (correspondant à la position stable de l'organe portatif 14) vers sa position de libération, afin d'empêcher que l'organe portatif 14 soit inopportunément retiré de l'unité fixe 12 lorsque le véhicule est dans un état de marche. Ces moyens 50 à électro-aimant sont activés de façon connue en soi, respectivement désactivés, de préférence lors du démarrage, respectivement de l'arrêt, du moteur du véhicule.

Pour plus de précisions sur les aspects classiques du fonctionnement de la bascule de blocage 44 on pourra se référer utilement aux documents FR-A-2 779 563 (FR-98 07250) et FR-A-2 786 297 (FR-98 14571).

Le démarrage et l'arrêt du moteur du véhicule sont commandés par l'organe portatif 14. En effet, l'organe portatif 14 est déplaçable longitudinalement dans le tunnel 24 jusqu'à une position instable d'actionnement du contacteur de démarrage 40 située au-delà de sa position stable par rapport à l'extrémité d'accès du tunnel 24. Entre ses positions stable et instable, l'organe portatif 14 est en prise avec la partie interne 44I de la bascule.

L'organe portatif 14 est rappelé depuis sa position instable vers sa position stable par des moyens élastiques comprenant de préférence un ressort 52 à effet angulaire agissant autour de l'axe de rotation de la bascule 44.

Ce ressort de rappel 52, illustré notamment sur les figures 2, 3 et 5, a également un effet de poussée, parallèlement à l'axe de rotation de la bascule 44, de manière à former une entretoise élastique de positionnement axial de la bascule 44.

Le ressort de rappel 52 est précontraint de manière à exercer sur la bascule 44, lorsque l'organe portatif 14 est dans sa position stable, un effort opposé et supérieur à celui du ressort bistable 48. De préférence, lorsque l'organe portatif 14 est dans sa position stable, le ressort de rappel 52 exerce un effort deux à trois fois supérieur à celui du ressort bistable 48.

En se référant notamment à la figure 3, on voit que les contacteurs électriques de marche 38 et de démarrage 40 sont actionnés par l'intermédiaire d'une came 54 solidaire de la partie externe 44E de la bascule.

Le véhicule étant à l'arrêt, pour faire démarrer le moteur de ce véhicule, l'utilisateur procède de la façon suivante.

Tout d'abord, l'utilisateur introduit l'organe portatif 14 dans l'extrémité d'accès du tunnel 24 et pousse cet organe portatif 14 vers l'extrémité distale du tunnel 24.

L'organe portatif 14, poussé dans le tunnel 24, coopère initialement avec le doigt de commande 42, de façon à actionner le contacteur d'accessoires 36, puis poursuit sa course jusqu'à sa position stable dans laquelle il est en prise avec la bascule 44. A cette position stable de l'organe portatif 14 correspond une position de la came 54 de la bascule dans laquelle cette came actionne le contacteur de marche 38. L'effet d'avalement évoqué plus haut et la résistance qu'oppose le ressort de rappel 52 au déplacement de l'organe portatif 14 (via la partie interne de la bascule 44) indiquent à l'utilisateur que l'organe portatif 14 a atteint sa position stable.

Pour commander le démarrage du moteur du véhicule, l'utilisateur pousse davantage l'organe portatif 14 vers l'extrémité distale du tunnel, en exerçant sur cet organe portatif 14 un effort suffisant pour vaincre la force élastique de rappel du ressort 52. L'organe portatif 14 atteint alors sa position instable qui est définie par exemple par la coopération de butées complémentaires de fin de course ménagées sur la partie interne 441 de la bascule et le support 16 de l'unité fixe 12. A la position instable de l'organe portatif 14 correspond une position de la came 54 de la bascule dans laquelle cette came actionne le contacteur de démarrage 40. Par ailleurs, lorsque l'organe portatif 14 atteint sa position instable, les moyens 50 à électroaimant, qui interdisent le retour de la bascule de blocage 44 vers sa position de libération de l'organe portatif, sont activés.

Après démarrage du moteur, l'utilisateur relâche l'organe portatif 14 qui est automatiquement rappelé par le ressort 52 vers sa position stable de marche du véhicule. En cas d'échec du démarrage du moteur, l'utilisateur repousse l'organe portatif 14 vers l'extrémité distale du tunnel autant de fois que cela est nécessaire pour obtenir le démarrage du véhicule.

Lorsque l'utilisateur souhaite arrêter le moteur du véhicule, il pousse à nouveau l'organe portatif 14 vers l'extrémité distale du tunnel, comme pour effectuer l'étape de démarrage décrite ci-dessus, de façon à actionner de nouveau le contacteur 40. Ceci à pour effet d'arrêter le moteur et de désactiver les moyens 50 à électroaimant, interdisant le retour de la bascule de blocage 44 vers sa position de libération de l'organe portatif. L'utilisateur relâche ensuite l'organe portatif 14, qui est automatiquement rappelé par le ressort 52 vers sa position stable, et retire le cas échéant l'organe portatif du tunnel 24 en le saisissant par son extrémité proximale qui fait saillie à l'extérieur de ce tunnel.

Parmi les avantages de l'invention, on notera notamment que celle-ci permet d'éviter efficacement l'usure inesthétique de l'organe portatif de l'ensemble pour l'échange de données et d'optimiser l'étanchéité aux salissures de l'unité fixe de cet ensemble.

## Revendications

1. Ensemble pour l'échange de données, comprenant un organe portatif (14) formant support de données, ayant une forme générale prismatique mince délimitée par deux grandes faces longitudinales opposées (F1,F2), deux petites faces longitudinales opposées (F3,F4) et deux petites faces transversales opposées (F5,F6), et une unité fixe (12) d'échange de données munie d'un tunnel (24) de logement de l'organe portatif (14) comprenant des parties proximale (24P) et distale (24D) séparées par un volet mobile (26), chaque partie (24P,24D) du tunnel (24) étant délimitée par deux petites parois longitudinales opposées (PD3,PD4,PP3,PP4) parallèles aux petites faces (F3,F4) de l'organe portatif (14) lorsque ce dernier est logé dans le tunnel (24), **caractérisé en ce qu'**une rainure de guidage (30) est ménagée sur chaque petite face longitudinale (F3,F4) de l'organe portatif (14) et est destinée à coopérer avec une nervure complémentaire de guidage (32) ménagée sur une petite paroi longitudinale correspondante (PD3,PD4) de la partie distale (24D) du tunnel (24), de manière à ce que les frottements entre l'organe portatif (14) et les parois délimitant la parie distale (24D) du tunnel (24) se limitent essentiellement aux frottements entre les surfaces délimitant, d'une part les rainures (30) et, d'autre part, les nervures de guidage (32).

2. Ensemble selon la revendication 1, **caractérisé en ce que** chaque petite paroi longitudinale (PP3,PP4) de la partie proximale du tunnel (24) comprend un doigt racleur (34) destiné à coopérer avec une rainure de guidage correspondante (30) de l'organe portatif (14).

3. Ensemble selon la revendication 1 ou 2, **caractérisé en ce que** chaque rainure de guidage (30) de l'organe portatif (14) est munie d'une extrémité distale débouchante (30D) et d'une extrémité proximale fermée (30P) délimitée par un congé s'incurvant parallèlement aux grandes faces longitudinales (F1,F2) de l'organe portatif (14).

4. Ensemble selon l'une quelconque des revendications précédentes, **caractérisé en ce que** la partie proximale (24P) du tunnel (24) est délimitée par un organe (28) de diffusion de lumière.

5. Ensemble selon l'une quelconque des revendications précédentes, **caractérisé en ce que** l'unité d'échange de données (12) comprend au moins un contacteur électrique (36), extérieur au tunnel (24), actionné par l'organe portatif (14) par l'intermédiaire d'un élément de commande (42) faisant saillie dans le tunnel (24) à travers une petite paroi longitudinale (PD3) délimitant celui-ci de façon à coopérer avec une rainure de guidage (30) de l'organe portatif (14).

6. Ensemble selon l'une quelconque des revendications précédentes, **caractérisé en ce que** l'unité d'échange de données (12) comprend
une bascule (44) de blocage de l'organe portatif (14) dans le tunnel (24) munie d'une partie (44I) interne au tunnel (24), destinée à coopérer avec l'organe portatif (14), et d'une partie (44E) externe au tunnel (24), et
au moins un contacteur électrique (38,40), extérieur au tunnel (24), actionné par l'organe portatif (14) par l'intermédiaire de la partie externe (44E) de la bascule de blocage.

7. Ensemble selon la revendication 6, **caractérisé en ce que** l'unité d'échange de données (12) comprend deux contacteurs électriques (38,40), extérieurs au tunnel (24), actionnés successivement par l'organe portatif (14), lorsque ce dernier est déplacé dans le tunnel (24), par l'intermédiaire de la partie externe (44E) de la bascule de blocage.

8. Ensemble selon l'une quelconque des revendications précédentes, **caractérisé en ce que** la partie distale (24D) du tunnel (24) est délimitée par deux grandes parois longitudinales opposées (PD1,PD2), adjacentes aux petites parois (PD3,PD4), l'unité d'échange de données (12) comprenant un circuit imprimé (20) séparé du volume interne du tunnel (24) par une première grande paroi longitudinale (PD2), la dimension longitudinale de cette première grande paroi longitudinale (PD2) étant telle que l'organe portatif (14) est toujours séparé du circuit imprimé (20) par la première grande paroi longitudinale (PD2) quelque soit la position de l'organe portatif (14) dans la partie distale (24D) du tunnel (24).

9. Ensemble selon la revendication 6 ou 7 prise en combinaison avec la revendication 8, **caractérisé en ce que** la partie (441) de bascule de blocage interne au tunnel (24) s'étend à travers la seconde grande paroi longitudinale (PD1) du tunnel (24).

10. Ensemble selon l'une quelconque des revendications précédentes, **caractérisé en ce que** l'unité d'échange de données (12) est agencée dans un véhicule automobile et assure une fonction d'antivol par traitement de données dont certaines, contenues dans l'organe portatif (14), sont représentatives d'au moins un utilisateur autorisé du véhicule.

11. Ensemble selon les revendications 5 et 10 prises ensemble, **caractérisé en ce que** le contacteur électrique (36) actionné par l'intermédiaire d'un élément de commande (42) faisant saillie dans le tunnel (24) active un état de mise sous tension d'accessoires du véhicule.

12. Ensemble selon les revendications 7 et 10 prises ensemble, **caractérisé en ce qu'**un (38) des contacteurs électriques actionnés par l'intermédiaire de la partie externe (44E) de la bascule de blocage active un état de marche du véhicule et l'autre (40) des contacteurs électriques actionnés par l'intermédiaire de la partie externe (44E) de la bascule de blocage active un état de démarrage ou d'arrêt du moteur du véhicule.

## Claims

1. Assembly for exchanging data, comprising a portable member (14) forming a data medium, having a generally thin prismatic shape delimited by two large opposing longitudinal faces (F1, F2), two small opposing longitudinal faces (F3, F4) and two small opposing transversal faces (F5, F6), and a fixed unit (12) for exchanging data provided with a tunnel (24) housing the portable member (14) comprising proximal (24P) and distal (24D) portions separated by a moving flap (26), each portion (24P, 24D) of the tunnel (24) being delimited by two small opposing longitudinal walls (PD3, PD4, PP3, PP4) parallel to the small faces (F3, F4) of the portable member (14) when the latter is housed in the tunnel (24), **characterized in that** a guiding groove (30) is provided on each small longitudinal face (F3, F4) of the portable member (14) and is designed to cooperate with a complementary guiding rib (32) provided on a corresponding small longitudinal wall (PD3, PD4) of the distal portion (24D) of the tunnel (24), so that friction between the portable member (14) and the walls delimiting the distal portion (24D) of the tunnel (24) are essentially limited to the friction between the surface delimiting, on the one hand the grooves (30) and on the other hand the guiding ribs (32).

2. Assembly according to Claim 1, **characterized in that** each small longitudinal wall (PP3, PP4) of the proximal portion of the tunnel (24) comprises a scraping finger (34) designed to cooperate with a corresponding guiding groove (30) of the portable member (14).

3. Assembly according to Claim 1 or 2**, characterized in that** each guiding groove (30) of the portable member (14) is provided with an open distal end (30D) and a closed proximal end (30P) delimited by a fillet that is curved parallel to the large longitudinal faces (F1, F2) of the portable member (14).

4. Assembly according to any one of the preceding claims, **characterized in that** the proximal portion (24P) of the tunnel (24) is delimited by a light diffusing member (28).

5. Assembly according to any one of the preceding claims, **characterized in that** the data exchange unit (12) comprises at least one electrical contactor (36) external to the tunnel (24), operated by the portable member (14) via a control element (42) projecting into the tunnel (24) through a small longitudinal wall (PD3) delimiting the latter, so as to cooperate with a guiding groove (30) of the portable member (14).

6. Assembly according to any one of the preceding claims, **characterized in that** the data exchange unit (12) comprises
a rocker (44) for immobilizing the portable member (14) in the tunnel (24) provided with a portion (441) internal to the tunnel (24), designed to cooperate with the portable member (14) and a portion (44E) external to the tunnel (24), and
at least one electrical contactor (38, 40), external to the tunnel (24), operated by the portable member (14) via the external portion (44E) of the immobilizing rocker.

7. Assembly according to Claim 6, **characterized in that** the data exchange unit (12) comprises two electrical contactors (38, 40) external to the tunnel (24), operated in succession by the portable member (14), when the latter is displaced in the tunnel (24), via the external portion (44E) of the immobilizing rocker.

8. Assembly according to any one of the preceding claims, **characterized in that** the distil portion (24D) of the tunnel (24) is delimited by two large opposing longitudinal walls (PD1, PD2) adjacent to the small walls (PD3, PD4), the data exchange unit (12) comprising a printed circuit (20) separated from the internal volume of the tunnel (24) by a first large longitudinal wall (PD2), the longitudinal dimension of this first large longitudinal wall (PD2) being such that the portable member (14) is always separated from the printed circuit (20) by the first large longitudinal wall (PD2) regardless of the position of the portable member (14) in the distal portion (24D) of the tunnel (24).

9. Assembly according to Claim 6 or 7 taken in conjunction with Claim 8, **characterized in that** the immobilizing rocker portion (441) internal to the tunnel (24) extends through the second large longitudinal wall (PD1) of the tunnel (24).

10. Assembly according to any one of the preceding claims, **characterized in that** the data exchange unit (12) is arranged in a motor vehicle and provides an anti-theft function based on data processing, some of which data, contained in the portable member (14), are representative of at least one authorized user of the vehicle.

11. Assembly according to Claims 5 and 10 taken together, **characterized in that** the electrical contactor (36) operated via a control element (42) projecting into the tunnel (24) activates a power-up state for accessories of the vehicle.

12. Assembly according to Claims 7 and 10 taken together, **characterized in that** one (38) of the electrical contactors operated via the external portion (44E) of the immobilizing rocker activates an on state of the vehicle and the other (40) of the electrical contactors operated via the external portion (44E) of the immobilizing rocker activates a start or stop state of the engine of the vehicle.

## Patentansprüche

1. Datenaustauscheinheit, die ein einen Datenträger bildendes, tragbares Bauteil (14) von dünner, allgemein prismatischer Form, die von zwei großen einander gegenüberliegenden Längsseiten (F1, F2), zwei kleinen einander gegenüberliegenden Längsseiten (F3, F4) und zwei kleinen Querseiten (F5, F6) begrenzt wird, und eine feste Datenaustauscheinheit (12) enthält, die mit einem Tunnel (24) zur Aufnahme des tragbaren Bauteils (14) versehen ist, der einen proximalen (24P) und einen distalen Bereich (24D) enthält, die durch eine bewegliche Klappe (26) getrennt sind, wobei jeder Bereich (24P, 24D) des Tunnels (24) von zwei kleinen einander gegenüberliegenden Längswänden (PD3, PD4, PP3, PP4) parallel zu den kleinen Seiten (F3, F4) des tragbaren Bauteils (14), wenn letzteres im Tunnel (24) angeordnet ist, begrenzt wird, **dadurch gekennzeichnet, dass** eine Führungsrille (30) auf jeder kleinen Längsseite (F3, F4) des tragbaren Bauteils (14) vorgesehen und dazu bestimmt ist, mit einer komplementären Führungsrippe (32) zusammenzuwirken, die auf einer entsprechenden kleinen Längswand (PD3, PD4) des distalen Bereichs (24D) des Tunnels (24) vorgesehen ist, damit die Reibungen zwischen dem tragbaren Bauteil (14) und den den distalen Bereich (24D) des Tunnels (24) begrenzenden Wänden sich im Wesentlichen auf die Reibungen zwischen den Flächen beschränken, die einerseits die Rillen (30) und andererseits die Führungsrippen (32) begrenzen.

2. Einheit nach Anspruch 1, **dadurch gekennzeichnet, dass** jede kleine Längswand (PP3, PP4) des proximalen Bereichs des Tunnels (24) einen Abstreiffinger (34) enthält, der dazu bestimmt ist, mit einer entsprechenden Führungsrille (30) des tragbaren Bauteils (14) zusammenzuwirken.

3. Einheit nach Anspruch 1 oder 2, **dadurch gekennzeichnet, dass** jede Führungsrille (30) des tragbaren Bauteils (14) mit einem distalen offenen Ende (30D) und mit einem proximalen geschlossenen Ende (30P) versehen ist, das von einer Abrundung begrenzt wird, die sich parallel zu den großen Längsseiten (F1, F2) des tragbaren Bauteils (14) krümmt.

4. Einheit nach einem der vorhergehenden Ansprüche, **dadurch gekennzeichnet, dass** der proximale Bereich (24P) des Tunnels (24) von einem lichtstreuenden Bauteil (28) begrenzt wird.

5. Einheit nach einem der vorhergehenden Ansprüche, **dadurch gekennzeichnet, dass** die Datenaustauscheinheit (12) mindestens einen elektrischen Kontaktschalter (36) außerhalb des Tunnels (24) enthält, der vom tragbaren Bauteil (14) über ein Steuerelement (42) betätigt wird, das in den Tunnel (24) durch eine diesen begrenzende kleine Längswand (PD3) hindurch vorsteht, um mit einer Führungsrille (30) des tragbaren Bauteils (14) zusammenzuwirken.

6. Einheit nach einem der vorhergehenden Ansprüche, **dadurch gekennzeichnet, dass** die Datenaustauscheinheit (12)
eine Kippvorrichtung (44) zum Blockieren des tragbaren Bauteils (14) im Tunnel (24), die mit einem Bereich (441) innerhalb des Tunnels (24), der dazu bestimmt ist, mit dem tragbaren Bauteil (14) zusammenzuwirken, und mit einem Bereich (44E) außerhalb des Tunnels (24) versehen ist, und
mindestens einen elektrischen Kontaktschalter (38, 40) außerhalb des Tunnels (24) enthält, der vom tragbaren Bauteil (14) über den äußeren Bereich (44E) der Blockier-Kippvorrichtung betätigt wird.

7. Einheit nach Anspruch 6, **dadurch gekennzeichnet, dass** die Datenaustauscheinheit (12) zwei elektrische Kontaktschalter (38, 40) außerhalb des Tunnels (24) enthält, die nacheinander vom tragbaren Bauteil (14), wenn letzteres im Tunnel (24) bewegt wird, über den äußeren Bereich (44E) der Blockier-Kippvorrichtung betätigt werden.

8. Einheit nach einem der vorhergehenden Ansprüche, **dadurch gekennzeichnet, dass** der distale Bereich (24D) des Tunnels (24) von zwei großen einander gegenüberliegenden Längswänden (PD1, PD2) begrenzt wird, die den kleinen Wänden (PD3, PD4) benachbart sind, wobei die Datenaustauscheinheit (12) eine gedruckte Schaltung (20) enthält, die vom Innenvolumen des Tunnels (24) durch eine erste große Längswand (PD2) getrennt ist, wobei die Längsabmessung dieser ersten großen Längswand (PD2) derart ist, dass das tragbare Bauteil (14) immer durch die erste große Längswand (PD2) von der gedruckten Schaltung (20) getrennt ist, unabhängig von der Stellung des tragbaren Bauteils (14) im distalen Bereich (24D) des Tunnels (24).

9. Einheit nach Anspruch 6 oder 7 in Kombination mit Anspruch 8, **dadurch gekennzeichnet, dass** der Bereich (441) der Blockier-Kippstufe innerhalb des Tunnels (24) sich quer über die zweite große Längswand (PD1) des Tunnels (24) erstreckt.

10. Einheit nach einem der vorhergehenden Ansprüche, **dadurch gekennzeichnet, dass** die Datenaustauscheinheit (12) in einem Kraftfahrzeug angeordnet ist und eine Diebstahlsicherungsfunktion durch Verarbeitung von Daten gewährleistet, von denen bestimmte, die im tragbaren Bauteil (14) enthalten sind, für mindestens einen berechtigten Benutzer des Fahrzeugs repräsentativ sind.

11. Einheit nach den Ansprüchen 5 und 10 zusammen gesehen, **dadurch gekennzeichnet, dass** der elektrische Kontaktschalter (36), der über ein in den Tunnel (24) vorstehendes Steuerelement (42) betätigt wird, einen Zustand des Einschaltens von Zubehörteilen des Fahrzeugs aktiviert.

12. Einheit nach den Ansprüchen 7 und 10 zusammen gesehen, **dadurch gekennzeichnet, dass** einer der über den äußeren Bereich (44E) der Blockier-Kippvorrichtung betätigten elektrischen Kontaktschalter (38) einen Fahrbetriebszustand des Fahrzeugs aktiviert, und der andere der über den äußeren Bereich (44E) der Blockier-Kippvorrichtung betätigten elektrischen Kontaktschalter (40) einen Zustand des Anlassens oder Abstellens des Motors des Fahrzeugs aktiviert.
